# EUROPÄISCHE PATENTANMELDUNG

(11) **EP 3 868 598 A1**
(43) Veröffentlichungstag der Anmeldung: **25.08.2021**
(21) Anmeldenummer: 20157987.7
(22) Anmeldetag: 18.02.2020
(51) Int. Cl.: B60L 53/16, H01R 13/453, H01R 13/639, H01R 24/00

(54) **STECKDOSE, INSBESONDERE LADESTECKDOSE FÜR ELEKTROFAHRZEUGE**

(71) Anmelder: Mkem, Spol s.r.o., 06401 Stará Lubovna (SK)
(72) Erfinder: Wystron, Alexander, 6005 Luzern (CH)
(74) Vertreter: Brinkmann & Partner

(57) **Zusammenfassung**

Die Erfindung betrifft eine Steckdose, insbesondere Ladesteckdose für Elektrofahrzeuge, mit einem Dosenkörper (2) zur Aufnahme eines Steckers, wobei der Dosenkörper (2) eine Mehrzahl von Hülsen (4) aufweist, die zumindest teilweise mit stromleitenden Kontakten ausgestattet sind, die bei einem vom Dosenkörper (2) aufgenommenen Stecker in elektrischer Wirkverbindung mit vom Stecker bereitgestellten Steckerstiften stehen, mit zwei verdrehbar ausgebildeten Schwenkhebeln (15), die aus einer Verschlussstellung in eine Freigabestellung und umgekehrt überführbar sind, wobei die stromleitenden Kontakte in Verschlussstellung der Schwenkhebel (15) für eine elektrische Wirkverbindung mit den Steckerstiften mittels der Schwenkhebel (15) gesperrt sind, und mit einem verdrehbar ausgebildeten, steckerbetätigbaren Bedienelement (9), das mit dem Schwenkhebeln (15) zusammenwirkt, wobei das Bedienelement (9) steckereinsteckseitig des Dosenkörpers (2) unter Belassung eines Spaltraums angeordnet ist und dass die Schwenkhebel (15) im Spaltraum zwischen Bedienelement (9) und Dosenkörper (2) angeordnet sind.

## Beschreibung

Die Erfindung betrifft eine Steckdose, insbesondere eine Ladesteckdose für Elektrofahrzeuge, mit einem Dosenkörper zur Aufnahme eines Steckers, wobei der Dosenkörper eine Mehrzahl von Hülsen aufweist, die zumindest teilweise mit stromleitenden Kontakten ausgestattet sind, die bei einem vom Dosenkörper aufgenommenen Stecker in elektrischer Wirkverbindung mit vom Stecker bereitgestellten Steckerstiften stehen, mit zwei verdrehbar ausgebildeten Schwenkhebeln, die aus einer Verschlussstellung in eine Freigabestellung und umgekehrt überführbar sind, wobei die stromleitenden Kontakte in Verschlussstellung der Schwenkhebel für eine elektrische Wirkverbindung mit den Steckerstiften mittels der Schwenkhebel gesperrt sind, und mit einem verdrehbar ausgebildeten, steckerbetätigbaren Bedienelement, das mit den Schwenkhebeln zusammenwirkt.

Steckdosen der vorbeschriebenen Art sind aus dem Stand der Technik an sich gut bekannt, so zum Beispiel aus der DE 10 2010 048 713 A1.

Eine Steckdose der vorbekannten Bauart verfügt über einen Dosenkörper. Im bestimmungsgemäßen Verwendungsfall dient dieser Dosenkörper der Aufnahme eines in die Steckdose einzuführenden Steckers.

Der Dosenkörper weist eine Mehrzahl von Hülsen auf, die er nach Art eines Gehäuses umgibt. Zumindest einige dieser Hülsen sind mit stromleitenden Kontakten ausgestattet. Diese wirken bei einem bestimmungsgemäß vom Dosenkörper aufgenommenen Stecker mit vom Stecker bereitgestellten Steckerstiften zusammen. Bei einem bestimmungsgemäß in die Steckdose eingeführten Stecker ist so ein elektrischer Kontakt zwischen den stromleitenden Kontakten des Dosenkörpers einerseits und den Steckerstiften des Steckers andererseits ausgebildet.

Um einen direkten Zugriff auf die stromleitenden Kontakte des Dosenkörpers bei einem nicht in die Steckdose eingeführten Stecker zu vermeiden, ist es zum Beispiel aus der schon eingangs genannten DE 10 2010 048 713 A1 bekannt, eine verschwenkbare Schutzklappe vorzusehen. Diese Schutzklappe kann aus einer Verschlussstellung in eine Freigabestellung und umgekehrt überführt werden. Befindet sich die Schutzklappe in ihrer Verschlussstellung, so sind die stromleitenden Kontakte des Dosenkörpers abgedeckt und von außen nicht frei zugänglich. Befindet sich die Schutzklappe indes in Freigabestellung, so ist eine elektrische Kontaktierung der stromleitenden Kontakte des Dosenkörpers mit den von einem Stecker bereitgestellten Steckerstiften möglich.

Eine gattungsgemäße Steckdose ist aus der EP 2 685 568 A1 bekannt. Gemäß dieser vorbekannten Konstruktion dienen zur Abdeckung der vom Dosenkörper bereitgestellten Kontakte verdrehbar ausgebildete Schwenkhebel. Diese verfügen jeweils über einstückig damit ausgebildete Fortsätze, die in Verschlussstellung durch von den Hülsen jeweils bereitgestellte Schlitze greifen und so die davon beherbergten stromleitenden Kontakte steckereinsteckseitig abdecken.

Zur Überführung der Schwenkhebel aus einer Verschlussstellung in eine Freigabestellung ist nach der EP 2 685 568 A1 ein translatorisch verfahrbares Bedienelement vorgesehen, das steckerbetätigbar ist und mit den Schwenkhebeln zusammenwirkt. Dieses Bedienelement ist mit einem Fortsatz ausgerüstet, das durch eine Öffnung hindurch in den vom Dosenkörper bereitgestellten Steckeraufnahmeraum ragt. Im Moment des Einführens eines Steckers wirkt dieser auf das Bedienelement ein, infolgedessen dieses translatorisch verfährt, was wiederum zu einer Verdrehung der Schwenkhebel führt, so dass die stromleitenden Kontakte des Dosenkörpers freigegeben werden.

Von Vorteil der Konstruktion nach der EP 2 685 568 A1 ist insbesondere die Kompaktheit der so ausgebildeten Steckdose. Denn die Schwenkhebel und auch das Bedienelement sind außenumfangsseitig des Dosenkörpers angeordnet und greifen in Verschlussstellung durch entsprechende vom Dosenkörper bereitgestellte Öffnungen hindurch in den vom Dosenkörper bereitgestellten Steckeraufnahmeraum hinein. Damit ist ein unerwünschter Aufbau der Steckdose in Längsrichtung vermieden.

Obgleich sich die aus der EP 2 685 568 A1 bekannte Konstruktion im alltäglichen Praxiseinsatz bewährt hat, ist sie nicht frei von Nachteilen. So kann die dosenkörperseitige Ausgestaltung von Schlitzen und Öffnungen zu Dichtigkeits- und Verschmutzungsproblemen führen. Ferner ist die mechanische Zusammenwirkung von Bedienelement und Schwenkhebeln vergleichsweise kompliziert ausgeführt, womit eine entsprechend hohe Störanfälligkeit gegeben ist. Nicht zuletzt bedarf es eines ebenfalls vergleichsweise komplex ausgebildeten Sicherungsmechanismusses, um ein unerwünschtes Überführen der Schwenkhebel in eine Freigabestellung sicher zu unterbinden.

Es ist deshalb die **Aufgabe** der Erfindung, eine Steckdose der eingangs genannten Art vorzuschlagen, die einen vergleichsweise einfachen und damit robusten Aufbau aufweist.

Zur **Lösung** dieser Aufgabe wird mit der Erfindung eine Steckdose der eingangs genannten Art vorgeschlagen, die sich dadurch auszeichnet, dass das Bedienelement steckereinsteckseitig des Dosenkörpers unter Belassung eines Spaltraums angeordnet ist und dass die Schwenkhebel im Spaltraum zwischen Bedienelement und Dosenkörper angeordnet sind.

In Abkehr zur Konstruktion nach der EP 2 685 568 A1 wird mit der Erfindung vorgeschlagen, Bedienelement und Schwenkhebel frontseitig des Dosenkörpers, das heißt steckereinsteckseitig des Dosenkörpers anzuordnen. Damit baut die Steckdose in Längsrichtung zwar auf, doch es ist eine im Aufbau und auch in der späteren Verwendung einfache Konstruktion gegeben, die in vorteilhafter Weise robust ist. Zudem sind jegliche Dichtigkeits- und Verschmutzungsprobleme vermieden. Darüber hinaus sind sowohl das Bedienelement als auch die Schwenkhebel von außen gut zugänglich, was im Falle eines möglichen Defekts eine Reparatur ermöglicht. Zudem ist eine Nachrüstung schon bestehender Steckdosen möglich.

Gemäß der erfindungsgemäßen Ausgestaltung ist das Bedienelement beabstandet zum Dosenkörper angeordnet, womit ein Spaltraum zwischen Bedienelement und Dosenkörper gegeben ist. In diesem Spaltraum, das heißt zwischen Bedienelement und Dosenkörper sind die Schwenkhebel angeordnet. Damit sind die Schwenkhebel frontseitig vom Bedienelement abgedeckt und somit geschützt. Rückseitig der Schwenkhebel befindet sich das Dosengehäuse, so dass auch eine rückseitige Abdeckung der Schwenkhebel gegeben ist.

Das Bedienelement ist im Unterschied zur Konstruktion nach der EP 2 685 568 B1 nicht translatorisch verfahrbar, sondern verdrehbar ausgebildet. Eine Verdrehbewegung des Bedienelements führt zu einer entsprechenden Verdrehbewegung auch der Schwenkhebel, da das Bedienelement und die Schwenkhebel in mechanischer Wirkverbindung stehen. Auch insoweit ist eine im Vergleich zur Konstruktion nach der EP 2 685 568 A1 vereinfachte Ausgestaltung gegeben.

Das Bedienelement ist steckerbetätigbar ausgebildet. Bei einer bestimmungsgemäßen Verwendung der Steckdose findet mithin mittels eines verwenderseitig geführten Steckers zunächst eine Verschwenkbewegung des Bedienelements statt, infolgedessen die damit in Wirkverbindung stehenden Schwenkhebel aus einer Verschlussstellung in eine Freigabestellung verdrehen. Sobald die Freigabestellung erreicht ist, sind die vom Dosenkörper beherbergten Kontakte nicht mehr gesperrt und der Stecker kann in bestimmungsgemäßer Weise in die Steckdose zur Kontaktierung der Steckdosenkontakte mit den Steckerstiften geführt werden.

Gemäß einem weiteren Merkmal der Erfindung ist vorgesehen, dass das Bedienelement und die Schwenkhebel unter Zwischenordnung einer Getriebeeinheit in Wirkverbindung stehen.

Zwecks Kraftübertragung zwischen Bedienelement und Schwenkhebel ist erfindungsgemäß eine Getriebeeinheit vorgesehen. Es ist so eine robuste Ausgestaltung gegeben, die wenig störanfällig ist und einen langlebigen Betrieb der Steckdose ermöglicht. Dabei findet im bestimmungsgemäßen Betrieb mittels der Getriebeeinheit eine Kraftübertragung vom Bedienelement auf die Schwenkhebel statt. Dabei muss im Unterschied zum Stand der Technik nach der EP 2 685 568 A1 nicht eine translatorische Verfahrbewegung des Bedienelements in eine rotatorische Verdrehbewegung der Schwenkhebel übersetzt werden. Gemäß der erfindungsgemäßen Ausgestaltung ist das Bedienelement ebenso wie die Schwenkhebel verdrehbar ausgebildet, so dass eine Verdrehbewegung des Bedienelements direkt in eine Verdrehbewegung der Schwenkhebel überführt werden kann. Dies erfolgt bevorzugterweise mittels eines Zahnräder aufweisenden Getriebes.

Gemäß einem weiteren Merkmal der Erfindung ist vorgesehen, dass das Bedienelement und/oder die Schwenkhebel unter Federvorspannung in Verschlussstellung stehen.

Das Bedienelement und/oder die Schwenkhebel stehen unter Federvorspannung und sind deshalb bestrebt, in die Verschlussstellung zurück zu verdrehen. Dies führt dazu, dass nach einem Herausziehen eines Steckers aus der Steckdose ohne verwenderseitiges hinzutun ein Überführen insbesondere der Schwenkhebel in die Verschlussstellung stattfindet. Da die Schwenkhebel und das Bedienelement unter Zwischenordnung einer Getriebeeinheit in Wirkverbindung stehen, also stets kraftübertragend miteinander gekoppelt sind, ist es ausreichend, entweder das Bedienelement oder die Schwenkhebel unter Federvorspannung zu stellen. Alternativ können aber auch Bedienelement und die Schwenkhebel unter Federvorspannung stehen. Entscheidend ist, dass bei einer Überführung der Schwenkhebel in eine Freigabestellung verwenderseitig entgegen der auf das Bedienelement oder die Schwenkhebel einwirkenden Federkraft zu verdrehen ist, so dass das Bedienelement und/oder die Schwenkhebel in Freigabestellung unter erhöhter Federvorspannung stehen, so dass nach einem Ziehen eines Steckers eine automatische und federinduzierte Rücküberführung des Bedienelements und/oder der Schwenkhebel in die Verschlussstellung erfolgen kann. Dabei stehen das Bedienelement und/oder die Schwenkhebel auch noch in Verschlussstellung unter Federvorspannung, so dass ein unbeabsichtigtes Verdrehen aus dieser Verschlussstellung heraus vermieden ist.

Die erfindungsgemäße Steckdose ist gemäß einem weiteren Merkmal durch einen den Spaltraum zwischen Bedienelement und Dosenkörper umfangsseitig umgebenden Ringkörper gekennzeichnet. Der Ringkörper umschließt mithin die Schwenkhebel außenumfangsseitig, so dass sie von manipulativen Eingriffen geschützt sind. Ein seitlicher Zugriff auf die Schwenkhebel ist dank des Ringkörpers nicht möglich.

Gemäß einem weiteren Merkmal der Erfindung ist ein Blockierelement vorgesehen, mittels dem eine Überführung des Bedienelements aus einer Verschlussstellung in eine Freigabestellung sperrbar ist. Dieses Blockierelement sorgt zusätzlich dafür, dass ein unbeabsichtigtes Überführen des Bedienelements in die Freigabestellung vermieden ist. Denn das Blockierelement sperrt das Bedienelement in seiner Verdrehbarkeit. Erst wenn eine verwenderseitige Entsperrung gegeben ist, das Bedienelement also vom Blockierelement freigegeben ist, kann eine bestimmungsgemäße Verdrehbewegung des Bedienelements stattfinden.

Gemäß einem weiteren Merkmal der Erfindung ist vorgesehen, dass das Blockierelement ein unter Federvorspannung stehender Rastpin ist. Im bestimmungsgemäßen Verwendungsfall ist dieser Rastpin entgegen der auf ihn einwirkenden Federkraft zu verfahren, und zwar so weit, dass er das verdrehbar ausgebildete Bedienelement freigibt. Bevorzugterweise findet eine Betätigung des Rastpins mittels eines verwenderseitig geführten Steckers statt. Dieser wird zwecks Einführens in die Steckdose mit seiner steckdosenseitigen Randkante auf den als Blockierelement dienenden Rastpin gesetzt und infolge einer Einführbewegung des Steckers zur Freigabe des Bedienelements verfahren. Es ist insoweit eine Einhandbetätigung des Steckers möglich.

Gemäß einem weiteren Merkmal der Erfindung ist vorgesehen, dass das Bedienelement ein Ringteil aufweist. Dieses Ringteil hat eine zu einer Außenkontur eines Steckers korrespondierend ausgebildete Innenkontur. Im bestimmungsgemäßen Verwendungsfall ist der Stecker in das Ringteil des Bedienelements einzuführen, wobei aufgrund der korrespondierenden Konturausgestaltung das Ringteil mit seiner Innenkontur formschlüssig den Stecker umgreift. Dabei sind der Stecker beziehungsweise dessen Außenkontur und damit auch die vom Ringteil des Bedienelements bereitgestellte Innenkontur von der Kreisform abweichend ausgebildet, so dass ein in das Ringteil des Bedienelements eingeführter Stecker verdrehsicher vom Ringteil gehalten ist. Dies erbringt in vorteilhafter Weise eine exakte Ausrichtung des Steckers gegenüber der Steckdose, so dass bei einem weiteren Einführen des Steckers in die Steckdose die vom Stecker bereitgestellten Steckerstifte positionsgenau zu den Hülsen des Dosenkörpers und damit auch zu den davon jeweils beherbergten elektrischen Kontakten ausgerichtet sind. Dies vereinfacht eine bestimmungsgemäße Verwendung der erfindungsgemäßen Steckdosen.

Gemäß einem weiteren Merkmal der Erfindung ist vorgesehen, dass das Ringteil eine sphärisch in Richtung auf den Dosenkörper zulaufende Führungsfläche bereitstellt. Auch diese Ausgestaltung dient der vereinfachten Handhabung der erfindungsgemäßen Stockdose, denn ist hierdurch sichergestellt, dass eine positionsgenaue Einfädelung des Steckers durch das vom Bedienelement bereitgestellte Ringteil hindurch in den Dosenkörper der Steckdose stattfinden kann.

Gemäß einem weiteren Merkmal der Erfindung ist vorgesehen, dass das Ringteil in Verschlussstellung innenkonturseitig an dem als Blockierelement dienenden Rastpin anliegt. Bei einem Einführen eines Steckers entlang der vom Ringteil bereitgestellten Führungsfläche kommt die steckdosenseitige Randkante des Steckers automatisch in Wirkkontakt mit dem Rastpin. Bei einem weiteren Einführen des Steckers wird in schon vorbeschriebener Weise der Rastpin zurückgedrückt, bis er eine Stellung erreicht hat, in der das Bedienelement freigegeben ist. Alsdann kann das Bedienelement verwenderseitig mittels des Steckers verdreht werden, beispielsweise in Uhrzeigerrichtung, was zu einer Verschwenkbewegung ebenfalls der Schwenkhebel führt. Die Getriebeeinheit ist in ihrer Zahnradübersetzung so ausgelegt, dass sich die Schwenkhebel in Freigabestellung befinden, wenn sich auch das Bedienelement in Freigabestellung befindet. Der Stecker kann in dieser Stellung von Bedienelement und Schwenkhebeln durch das Ringteil des Bedienelements hindurch in die vom Dosenkörper bereitgestellte Steckeraufnahme eingeführt werden.

Gemäß einem weiteren Merkmal der Erfindung ist vorgesehen, dass das Bedienelement ein mit dem Ringteil einstückig ausgebildetes Anschlussteil aufweist, das verdrehfest endseitig einer Lagerwelle angeordnet ist. Dabei stellt die Lagerwelle die Drehachse bereit, um die herum das Bedienelement im Verwendungsfall dreht.

Gemäß einem weiteren Merkmal der Erfindung ist vorgesehen, dass die Lagerwelle endseitig ein Zahnrad trägt. Bei einer Verschwenkbewegung des Bedienelements kommt es mithin auch zu einer Verdrehbewegung der Lagerwelle, was zu einer Verdrehbewegung auch des damit gekoppelten Zahnrads führt.

Das endseitig der Lagerwelle angeordnete Zahnrad steht in Wirkverbindung mit einem je Schwenkhebel vorgesehen Zahnrad. Es sind also ein antriebsseitiges Zahnrad einerseits sowie zwei abtriebsseitige Zahnräder andererseits vorgesehen, die miteinander kämmen, ggfs. unter Zwischenordnung eines weiteren Zahnrades, je nach gewünschter Drehrichtung. Die so ausgebildete Getriebeeinheit sorgt dafür, dass eine Verdrehbewegung des Bedienelements direkt in eine Drehbewegung der Schwenkhebel überführt wird.

Das Übersetzungsverhältnis zwischen den Zahnrädern beträgt bevorzugterweise ½. Bei einer Verdrehbewegung des Bedienelements von zum Beispiel 15° verdrehen die beiden Schwenkhebel mithin jeweils um 30°. Es ist mithin eine Untersetzung zwischen den beiden Abtriebszahnrädern einerseits und dem Antriebszahnrad andererseits vorgesehen.

Die erfindungsgemäße Ausgestaltung erweist sich als insgesamt robust im Aufbau und in der Verwendung. Sie ist wenig störanfällig und langlebig. Die Zugänglichkeit der bewegbaren Teile von außen ermöglicht eine Reparatur im Defektfall. Ferner können Bestandssteckdosen nachausgerüstet werden.

Weitere Merkmale und Vorteile der Erfindung ergeben sich aus der nachfolgenden Beschreibung anhand der Figuren. Dabei zeigen
- Fig. 1: in schematisch perspektivischer Ansicht eine erfindungsgemäße Steckdose in Freigabestellung;
- Fig. 2: in einer Draufsicht von vorn die erfindungsgemäße Steckdose nach Fig. 1 in Verschlussstellung;
- Fig. 3: in einer schematischen Explosionsdarstellung eine erfindungsgemäße Steckdose gemäß einer zweiten Ausführungsform;
- Fig. 4: in schematischer Draufsicht von vorn die Steckdose nach Fig. 3 in Verschlussstellung;
- Fig. 5: in schematischer Draufsicht von vorn die Steckdose nach Fig. 3 in Freigabestellung und

Fig. 6 in schematischer Schnittansicht von vorn die Steckdose nach Fig. 5.

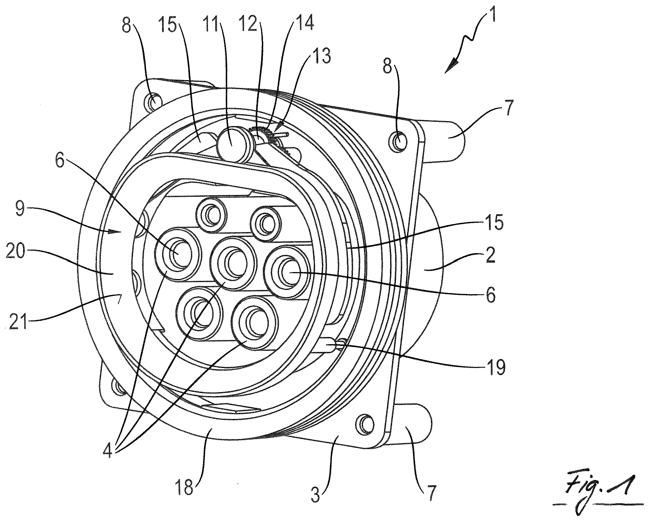

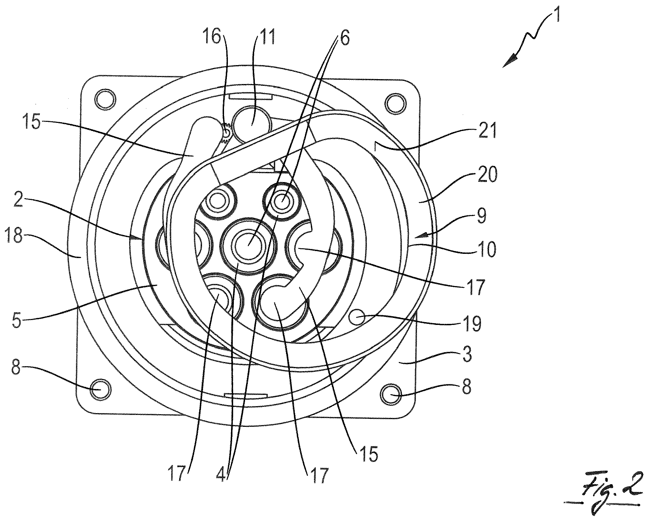

Wie eine Zusammenschau der Figuren 1 und 2 erkennen lässt, verfügt die erfindungsgemäße Steckdose 1 über einen Dosenkörper 2. Dieser stellt einen Volumenraum zur Aufnahme eines in den Figuren nicht näher dargestellten Steckers bereit.

Innerhalb des vom Dosenkörper 2 bereitgestellten Volumenraums sind Hülsen 4 angeordnet, die Durchgangsöffnungen 6 bereitstellen. Zumindest einige der Hülsen 4 nehmen mittels der Durchgangsöffnungen 6 stromleitende Kontakte auf, die bei einem vom Dosenkörper 2 aufgenommenen Stecker in elektrischer Wirkverbindung mit vom Stecker bereitgestellten Steckerstiften stehen. Wie insbesondere die Draufsicht nach Fig. 2 erkennen lässt, sind die Hülsen 4 von einer rückseitigen Platte 5 des Dosenkörpers 2 getragen.

Der Dosenkörper 2 schließt steckereinsteckseitig mit einer Dosenplatte 3 bündig ab. Auf ihrer Rückseite trägt die Dosenplatte 3 im dargestellten Ausführungsbeispiel vier Montagedome 7, die jeweils einen Kanal 8 bereitstellen, durch den hindurch Befestigungsmittel zur Verbindung der Dosenplatte 3 mit einem Gegenstück geführt werden können.

Frontseitig des Dosenkörpers 2, das heißt steckereinsteckseitig des Dosenkörpers 2 ist ein Bedienelement 9 angeordnet, und zwar unter Beabstandung eines Anstandes zum Dosenkörper 2, womit ein Spaltraum zwischen Bedienelement 9 und Dosenkörper 2 gegeben ist. Im Spaltraum zwischen Bedienelement 9 und Dosenkörper 2 sind zwei verdrehbar ausgebildete Schwenkhebel 15 angeordnet.

Das Bedienelement 9 und die Schwenkhebel 15 stehen unter Zwischenordnung einer Getriebeeinheit 13 in mechanischer Wirkverbindung, und zwar derart, dass eine Verdrehbewegung des Bedienelements 9 zu einer Verdrehbewegung auch der Schwenkhebel 15 führt. Wenn also das Bedienelement 9 aus der in Fig. 2 gezeigten Verschlussstellung im Uhrzeigersinn in die Freigabestellung nach Fig. 1 verdreht wird, so verdrehen auch die Schwenkhebel 15 entsprechend, und zwar aus der in Fig. 2 gezeigten Verschlussstellung in die in Fig. 1 gezeigte Freigabestellung.

Wie die Figuren 1 und 2 erkennen lassen, verfügt das Bedienelement 9 über ein Ringteil 20 und ein einstückig damit ausgebildetes Anschlussteil 11. Das Ringteil 20 dient im bestimmungsgemäßen Verwendungsfall der Hindurchführung eines in die Steckdose 1 einzuführenden Steckers, wobei das Ringteil 20 eine Innenkontur 10 aufweist, die korrespondierend zur Außenkontur eines Steckers ausgebildet ist. Wie insbesondere die Darstellung nach Fig. 1 erkennen lässt, verfügt das Ringteil 20 über eine Führungsfläche 21, die sphärisch in Richtung auf den Dosenkörper 2 ausgebildet ist.

Die Innenkontur 10 ist von der Kreisform abweichend ausgebildet. Damit ist sichergestellt, dass ein vom Ringteil 20 aufgenommener Stecker nicht relativ zum Ringteil 20 verdrehen kann. Die sphärisch ausgebildete Führungsfläche 21 dient dazu, einen in die Steckdose 1 einzuführenden Stecker positionsgerecht zu führen. Anstelle einer sphärischen Ausgestaltung der Führungsfläche 21 kann auch eine kantige, insbesondere scharfkantige Kontur vorgesehen sein, was einen sichereren Halt des Steckers im Moment des Einführens in die Steckdose erbringt. In Kombination mit der zur Außenkontur des Steckers ausgebildeten Innenkontur 10 ergibt sich in Freigabestellung nach Fig. 1, dass die vom Stecker bereitgestellten Steckerstifte positionsgenau den Durchgangsöffnungen der Hülsen 4 gegenüberliegen, so dass ein bestimmungsgemäßes Einstecken des Steckers in die Steckdose 1 stattfinden kann.

Der Anschlussteil 11 des Bedienelements 9 ist endseitig einer Lagerwelle 12 angeordnet. Diese Lagerwelle 12 stellt die Drehachse bereit, um die herum das Bedienelement 9 verdrehbar ist. Endseitig der Lagerwelle 12 ist ein erstes Zahnrad 14 angeordnet. Dieses ist ebenso wie das Bedienelement 9 verdrehfest an der Lagerwelle 12 angeordnet, so dass eine Verdrehbewegung des Bedienelements 9 auch zu einer Verdrehbewegung des Zahnrades 14 führt.

Die Getriebeanordnung 13 umfasst zwei weitere Zahnräder, wobei jeder Schwenkhebel 15 mit einem Zahnrad zusammenwirkt. Die beiden Zahnräder stehen im Eingriff mit dem Zahnrad 14, wie dies insbesondere Fig. 2 erkennen lässt. Damit sind die Schwenkhebel 15 und das Bedienelement 9 über die Getriebeeinheit 13 miteinander kraftgekoppelt.

Die Kraftkopplung von Bedienelement 9 und Schwenkhebel 15 bedingt, dass eine Verschwenkbewegung des Bedienelements 9 auch zu einer Verschwenkbewegung der Schwenkhebel 15 führt. Dies ergibt sich aus den Figuren insbesondere anhand eines Vergleichs der Figuren 1 und 2, wobei Fig. 1 die Freigabestellung und Fig. 2 die Verschlussstellung zeigt.

Ein jeder Schwenkhebel 15 weist auf seiner Innenseite jeweils radial vorstehende Verschlussabschnitte 17 auf, wie dies insbesondere Fig. 2 erkennen lässt. In der Verschlussstellung verschließen diese Verschlussabschnitte 17 die ihnen jeweils zugeordneten Hülsen 4. Damit sind die Hülsen 4 in Verschlussstellung frontseitig abgedeckt, so dass kein Zugriff auf die von diesen Hülsen 4 jeweils beherbergten Kontakten möglich ist.

Zur Lagefixierung des Bedienelements 9 in Verschlussstellung nach Fig. 2 ist ein Blockierelement in Form eines Rastpins 9 vorgesehen. Dieser Rastpin 9 ist federbelastet und liegt in Verschlussstellung an der Innenkontur 10 des Ringteils 20 des Bedienelements 9 an. Eine Verschwenkbewegung des Bedienelements 9 ist deshalb gesperrt und nicht möglich.

Der Rastpin 19 kann translatorisch in Richtung auf den Dosenkörper 2 verfahren werden, und zwar derart weit, dass er das Bedienelement 9 freigibt, so dass diese über den Rastpin 9 hin verschwenken kann, womit bei heruntergedrücktem Rastpin 9 ein Verschenken des Bedienelements 9 in die Freigabestellung nach Fig. 1 erfolgen kann. Für einen seitlichen Schutz der Schwenkhebel 15 ist ein Ringteil 18 vorgesehen, das steckersteckseitig des Dosenkörpers 2 auf der Dosenplatte 3 angeordnet ist. Dieses Ringteil 18 umgibt den Spaltraum zwischen Bedienelement 9 und Dosenkörper 2, so dass die dazwischen angeordneten Schwenkhebel 15 umfangsseitig abgedeckt und damit vor einem ungewollten Zugriff geschützt sind.

Die vorbeschriebene Konstruktion erfolgt eine Bedienung wie folgt. Ein Stecker ist verwenderseitig in das Ringteil 20 des Bedienelements 9 einzuführen. Dabei sorgt die von der Kreisform abweichend ausgebildete und zur Außenkontur des Steckers korrespondierend ausgebildete Innenkontur 10 des Ringteils 20 für eine positionsrichtige Ausrichtung des Steckers. Die vom Ringteil 20 bereitgestellte Führungsfläche 21 erleichtert eine Einfädelung des Steckers in das Ringteil 20.

Infolge des Einführens eines Steckers in das Ringteil 20 kommt der Stecker mit seiner dosenkörperseitigen Randkante in Berührungskontakt mit dem Rastpin 19. Bei einem weiteren Einführen des Steckers wird der Rastpin 19 in Richtung auf den Dosenkörper 2 verfahren, bis er in eine Position gerät, in der das Bedienelement 9 freigegeben ist und verschwenkt werden kann.

Benutzerseitig ist nun der Stecker im Uhrzeigersinn zu verdrehen, infolgedessen das Bedienelement 9 mit geführt, das heißt mit verdreht wird, und zwar um die von der Lagerwelle 12 bereitgestellte Drehachse. Dabei wird das Bedienelement 9 bis in die Freigabestellung nach Fig. 1 verdreht. Eine solche Verdrehbewegung kann beispielweise 15° umfassen.

Da das Bedienelement 9 unter Zwischenordnung der Getriebeeinheit 13 in Wirkverbindung mit den Schwenkhebeln 15 steht, verschwenken bei einer Verdrehbewegung des Bedienelements 9 auch die Schwenkhebel 15. Aufgrund der in Eingriff befindlichen Zahnräder verdrehen die Schwenkhebel 15 entsprechend. Bei einer Verschwenkbewegung des Bedienelements 9 im Uhrzeigersinn verdreht da zugehörige Zahnrad des in Fig. 2 rechten Schwenkhebels 15 entgegen den Uhrzeigersinn, womit der zugehörige Schwenkhebel 15 nach außen verdreht und die zugehörigen Hülsen freigibt.

Um eine solche Schwenkbewegung nach außen auch für den mit Bezug auf die Zeichnung nach Fig. 2 linken Schwenkhebel 15 zu erreichen, ist ein Zwischenzahnrad 16 zwischen Zahnrad 14 und Schwenkhebelzahnrad vorgesehen. Dieses Zwischenzahnrad 16 sorgt dafür, dass auch das Schwenkhebelzahnrad im Uhrzeigersinn verdreht, so dass eine Verschwenkbewegung des zugehörigen Schwenkhebels nach außen stattfindet. Im Ergebnis verschwenken beide Schwenkhebel nach außen und geben so die ihnen jeweils zugehörigen Hülsen 4 frei, so dass nach erfolgtem Verschwenken die Freigabestellung nach Fig. 1 erreicht ist und der Stecker nun bis in die vom Dosenkörper 2 bereitgestellte Aufnahme eingeführt werden kann, so dass die dosenseitigen Kontakte in elektrische Wirkverbindung mit den vom Stecker bereitgestellten Steckerstiften kommen.

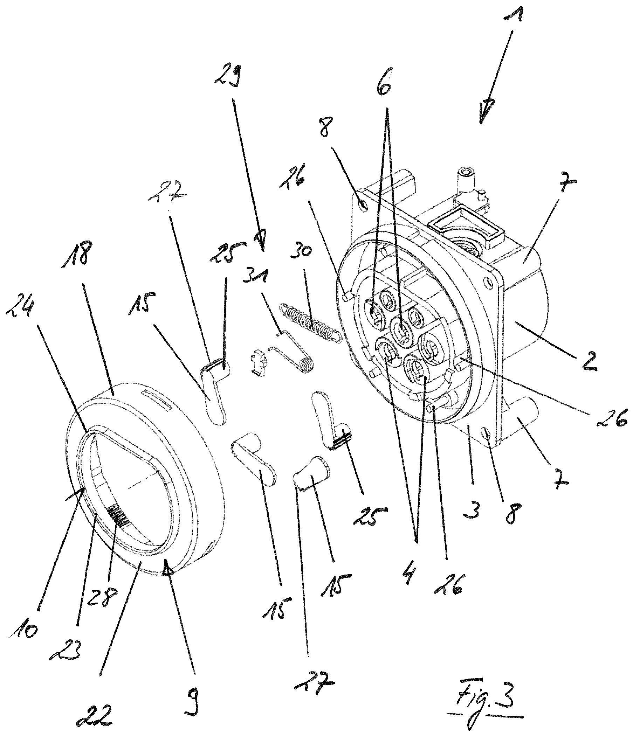

Die Figuren 3, 4, 5 und 6 zeigen ein zweites Ausführungsbeispiel der erfindungsgemäßen Steckdose 1, und zwar in unterschiedlichen Ansichten.

Gemäß der zweiten Ausführungsform nach den Figuren 3 bis 6 kommt je in Verschlussstellung abgedeckter Hülse 4 ein separat ausgebildeter Schwenkhebel 15 zum Einsatz. Dabei wirkt ein jeder Schwenkhebel 15 über jeweils eine Getriebeeinheit 13 mit dem Bedienelement 9 zusammen. Es sind demnach im Unterschied zum Ausführungsbeispiel nach den Figuren 1 und 2 nicht zwei Schwenkhebel 15 vorgesehen, die je mit zwei Hülsen 4 zusammenwirken, sondern stattdessen vier Schwenkhebel 15, wobei jeder Schwenkhebel 15 jeweils mit einer Hülse 4 zusammenwirkt.

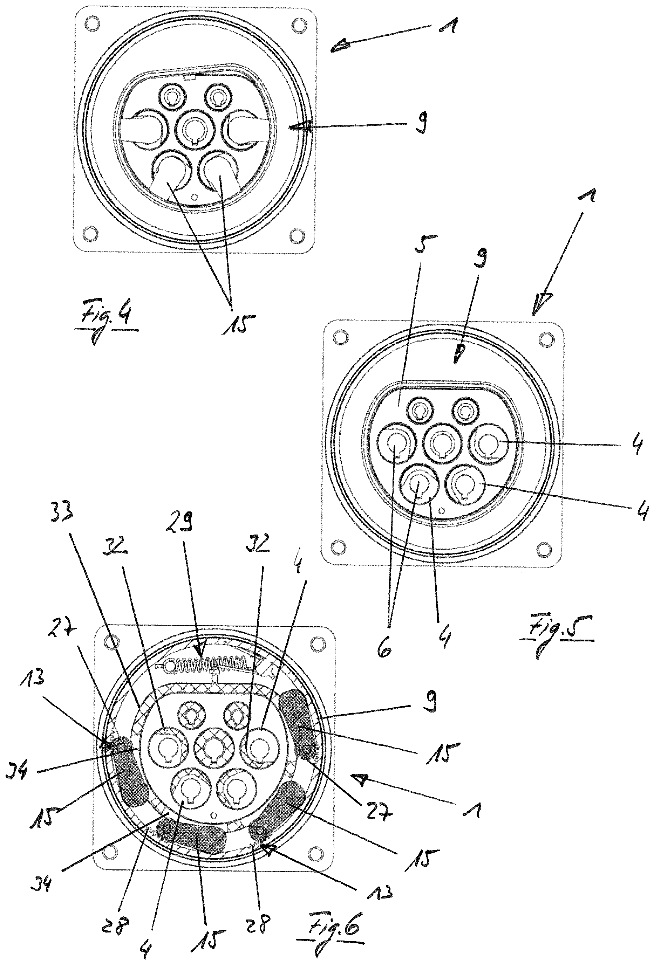

Wie sich insbesondere aus der Darstellung nach Fig. 3 ergibt, ist jeder Schwenkhebel 15 einstückig mit einem Fortsatz 25 ausgerüstet. Ein jeder Fortsatz 25 weist eine in Fig. 3 nicht näher zu erkennende Bohrung auf, in die im endmontierten Zustand ein dosenseitiger Achspin 26 eintaucht. Jeder Schwenkhebel 15 ist mithin im endmontierten Zustand um die vom jeweiligen Achspin 26 bereitgestellte Drehachse verdrehbar angeordnet und kann so aus einer Verschlussstellung, wie sie in Fig. 4 gezeigt ist, in eine Freigabestellung, wie sie in Fig. 5 gezeigt ist, überführt werden und umgekehrt.

Jeder Fortsatz 25 eines jeden Schwenkhebels 15 verfügt außenumfangsseitig über eine Außenverzahnung 27. Diese wirkt im endmontierten Zustand mit einer korrespondierend hierzu jeweils ausgebildeten Innenverzahnung 28 zusammen, die das Bedienelement 9 bereitstellt, wie sich insbesondere aus der teilgeschnittenen Ansicht nach Fig. 6 ergibt.

Das Bedienelement 9 verfügt gemäß dem zweiten Ausführungsbeispiel über einen Ringkörper 18. Dieser ist steckerseitig mit einer Platte 22 ausgerüstet, die für eine Steckeraufnahme über eine Öffnung 23 verfügt. Diese Öffnung 23 stellt eine korrespondierend zur Kontur eines Steckers ausgebildete Innenkontur 10 bereit. Um die Öffnung 23 randseitig zu stärken bzw. um eine Führung für einen in die Steckdose 1 einzuführenden Stecker zu geben, ist die Öffnung 23 außenumfangsseitig mit einer Randkante 24 umlaufend ausgerüstet.

Das Bedienelement 9 ist unter Zwischenschaltung einer Federanordnung 29 am Dosenkörper 2 verdrehbar angeordnet. Dabei verfügt die Federanordnung 29 über eine erste Feder 30 und eine zweite Feder 31, die, wie insbesondere die Darstellung nach Fig. 6 erkennen lässt, dafür Sorge tragen, dass sich das Bedienelement 9 bzw. die Schwenkhebel 15 bei einem nicht in die Steckdose 1 eingeführten Stecker in Verschlussstellung gemäß Fig. 4 befinden. Für eine bestimmungsgemäße Freigabe ist das Bedienelement 9 mittels eines von der Öffnung 23 des Bedienelements 9 aufgenommenen Steckers im Uhrzeigersinn bis in die Freigabestellung nach Fig. 5 zu verdrehen.

Wie sich insbesondere aus der Darstellung nach Fig. 6 ergibt, führt ein solches Verdrehen des Bedienelements im Uhrzeigersinn, d. h. mit Bezug auf die Blattebene nach Fig. 6 nach rechts dazu, dass die jeweiligen in Verzahnung mit dem Bedienelement 9 stehenden Schwenkhebel 15 gleichfalls im Uhrzeigersinn verdrehen, und zwar um die vom jeweiligen Achspin 26 bereitgestellte Drehachse. Infolge einer solchen Verdrehbewegung der Schwenkhebel 15 werden die jeweils zugehörigen Hülsen 4 freigegeben, so dass ein steckerseitiger Zugriff auf die jeweiligen Durchgangsöffnungen 6 der Hülsen 4 gestattet ist.

Wird der Stecker aus der Steckdose 1 verwenderseitig wieder herausgezogen, so verdreht das Bedienelement 9 aufgrund der auf das Bedienelement 9 einwirkenden Federanordnung 29 zurück, d. h gegen den Uhrzeigersinn. Infolgedessen kommt es auch zu einem Rückverdrehen der Schwenkhebel 15, und zwar aufgrund der zwischen den jeweiligen Schwenkhebeln 15 und dem Bedienelement 9 ausgebildeten Verzahnung, d. h. der jeweils vorgesehenen Getriebeeinheit 13.

Gemäß dem nach den Figuren 3 bis 6 dargestellten Ausführungsbeispiel sind die Hülsen 4 von einer ringförmig ausgebildeten Ummantelung nach Art einer Hülse 33 umgeben. Diese Hülse 33 verfügt je Schwenkhebel 15 über eine hülsenwandseitige Aussparung 34, durch die hindurch der jeweils zugehörige Schwenkhebel 15 bei einer Überführung in die Verschlussstellung gemäß Fig. 4 eintauchen kann.

Zudem ist je Hülse 4 vorgesehen, dass diese stirnseitig über eine jeweilige Randkante 32 verfügt, an der ein jeweils zugehöriger Schwenkhebel 15 in Verschlussstellung zu liegen kommt, wie dies insbesondere die Darstellung nach Fig. 4 erkennen lässt. Die jeweilige Stirnkante 32 dient mithin als Anschlag für den jeweils zugehörigen Schwenkhebel 15.

**Bezugszeichen**

| | | | |
|---|---|---|---|
| 1 | Steckdose | 33 | Hülse |
| 2 | Dosenkörper | 34 | Aussparung |
| 3 | Dosenplatte | | |
| 4 | Hülse | | |
| 5 | Platte | | |
| 6 | Durchgangsöffnung | | |
| 7 | Montagedom | | |
| 8 | Kanal | | |
| 9 | Bedienelement | | |
| 10 | Innenkontur | | |
| 11 | Anschlussteil | | |
| 12 | Welle | | |
| 13 | Getriebeeinheit | | |
| 14 | Zahnrad | | |
| 15 | Schwenkhebel | | |
| 16 | Zahnrad | | |
| 17 | Verschlussplatte | | |
| 18 | Ringkörper | | |
| 19 | Rastpin | | |
| 20 | Ringteil | | |
| 21 | Führungsfläche | | |
| 22 | Platte | | |
| 23 | Öffnung | | |
| 24 | Randkante | | |
| 25 | Fortsatz | | |
| 26 | Achspin | | |
| 27 | Außenverzahnung | | |
| 28 | Innenverzahnung | | |
| 29 | Federanordnung | | |
| 30 | Feder | | |
| 31 | Feder | | |
| 32 | Stirnkante | | |

## Patentansprüche

1. Steckdose, insbesondere Ladesteckdose für Elektrofahrzeuge, mit einem Dosenkörper (2) zur Aufnahme eines Steckers, wobei der Dosenkörper (2) eine Mehrzahl von Hülsen (4) aufweist, die zumindest teilweise mit stromleitenden Kontakten ausgestattet sind, die bei einem vom Dosenkörper (2) aufgenommenen Stecker in elektrischer Wirkverbindung mit vom Stecker bereitgestellten Steckerstiften stehen, mit zwei verdrehbar ausgebildeten Schwenkhebeln (15), die aus einer Verschlussstellung in eine Freigabestellung und umgekehrt überführbar sind, wobei die stromleitenden Kontakte in Verschlussstellung der Schwenkhebel (15) für eine elektrische Wirkverbindung mit den Steckerstiften mittels der Schwenkhebel (15) gesperrt sind, und mit einem verdrehbar ausgebildeten, steckerbetätigbaren Bedienelement (9), das mit dem Schwenkhebeln (15) zusammenwirkt,
**dadurch gekennzeichnet,**
**dass** das Bedienelement (9) steckereinsteckseitig des Dosenkörpers (2) unter Belassung eines Spaltraums angeordnet ist und dass die Schwenkhebel (15) im Spaltraum zwischen Bedienelement (9) und Dosenkörper (2) angeordnet sind.

2. Steckdose nach Anspruch nach Anspruch 1, **dadurch gekennzeichnet, dass** das Bedienelement (9) und die Schwenkhebel (15) unter Zwischenordnung einer Getriebeeinheit (13) in Wirkverbindung stehen.

3. Steckdose nach Anspruch 1 oder 2, **dadurch gekennzeichnet, dass** das Bedienelement (9) und/oder die Schwenkhebel (15) unter Federvorspannung in Verschlussstellung stehen.

4. Steckdose nach einem der vorhergehenden Ansprüche, **gekennzeichnet durch** einen den Spaltraum zwischen Bedienelement (9) und Dosenkörper (2) umfangsseitig umgebenden Ringkörper (18).

5. Steckdose nach einem der vorhergehenden Ansprüche, **gekennzeichnet durch** ein Blockierelement, mittels dem eine Überführung des Bedienelements (9) aus einer Verschlussstellung in eine Freigabestellung sperrbar ist.

6. Steckdose nach Anspruch 5, **dadurch gekennzeichnet, dass** das Blockierelement ein unter Federvorspannung stehender Rastpin (19) ist.

7. Steckdose nach einem der vorhergehenden Ansprüche, **dadurch gekennzeichnet, dass** das Bedienelement (9) ein Ringteil (20) mit einer zur Außenkontur des Steckers korrespondierenden Innenkontur (10) aufweist.

8. Steckdose nach Anspruch 7, **dadurch gekennzeichnet, dass** das Ringteil (20) eine sphärisch in Richtung auf den Dosenkörper (2) zulaufende Führungsfläche (21) bereitstellt.

9. Steckdose nach Anspruch 7 oder 8, **dadurch gekennzeichnet, dass** das Ringteil (20) in Verschlussstellung innenkonturseitig am Rastpin (20) anliegt.

10. Steckdose nach einem der vorhergehenden Ansprüche 7 bis 9, **dadurch gekennzeichnet, dass** das Bedienelement (9) ein mit dem Ringteil (20) einstückig ausgebildetes Anschlussteil (11) aufweist, das verdrehfest endseitig einer Lagerwelle (12) angeordnet ist.

11. Steckdose nach Anspruch 10, **dadurch gekennzeichnet, dass** die Lagerwelle (12) anderendseitig ein Zahnrad (14) trägt.

12. Steckdose nach Anspruch 11, **dadurch gekennzeichnet, dass** das Zahnrad (14) in Wirkverbindung mit einem je Schwenkhebel (15) vorgesehenen Zahnrad steht.

13. Steckdose nach Anspruch 12, **dadurch gekennzeichnet, dass** das Zahnradübersetzungsverhältnis ½ beträgt.
